# DEMANDE DE BREVET EUROPEEN

(11) **EP 2 987 689 A1**
(43) Date de publication de la demande: **24.02.2016**
(21) Numéro de dépôt: 15176060.0
(22) Date de dépôt: 09.07.2015
(51) Int. Cl.: B60S 1/34

(54) **RESSORT À LAME POUR UN BALAI D'ESSUIE-GLACE DE VÉHICULE**

(30) Priorité: 17.07.2014 FR 1456853
(71) Demandeur: Valeo Systèmes d'Essuyage, 78321 Le Mesnil Saint Denis (FR)
(72) Inventeur: ROUSSEAU, Jean-Franois, 63340 CHARBONNIER LES MINES (FR)
(74) Mandataire: Callu Danseux, Violaine

(57) **Abrégé**

Ressort à lame (20) pour un balai d'essuie-glace (10) d'une vitre de véhicule, en particulier automobile, comportant au moins une lame (26) flexible, le ressort ayant une forme allongée et comprenant à une première extrémité longitudinale des moyens (28) de liaison à au moins une vertèbre (16) de rigidification dudit balai, le ressort comprend ou porte à une deuxième extrémité longitudinale un organe tubulaire (30) configuré pour recevoir un axe (32) d'un entraîneur (22) dudit balai.

## Description

La présente invention concerne un ressort à lame pour un balai d'essuie-glace d'une vitre, en particulier arrière, de véhicule, par exemple automobile, ainsi qu'un entraîneur pour un balai d'essuie-glace, et un balai d'essuie-glace comportant un tel ressort à lame et/ou un tel entraîneur.

Classiquement, un balai d'essuie-glace d'une vitre d'un véhicule automobile comprend un corps longitudinal portant une lame d'essuyage, en général en caoutchouc, destinée à frotter contre la vitre du véhicule pour évacuer de l'eau en l'amenant en dehors du champ de vision du conducteur. Le balai comporte en outre au moins une vertèbre longitudinale qui rigidifie la lame d'essuyage, de manière à favoriser l'application de cette lame sur la vitre.

Dans le cas d'un balai d'essuie-glace d'une vitre arrière de véhicule, une extrémité du bras portant le balai est reliée par un entraîneur à l'arbre d'un moteur qui assure l'entraînement du balai dans un mouvement de va-et-vient angulaire. L'entraîneur est monté fixement sur l'arbre du moteur et le bras est monté pivotant vis-à-vis de l'entraîneur pour autoriser le pivotement du balai en vue par exemple du remplacement de sa lame d'essuyage. Un ressort sollicite le bras contre la vitre et évite au bras de s'écarter de la vitre en pivotant accidentellement vis-à-vis de l'entraîneur. En général, ce ressort est un ressort hélicoïdal dont une extrémité est fixée à l'entraîneur et dont l'autre extrémité est fixée au bras.

On a déjà proposé une technologie dans laquelle le balai est directement relié à l'entraîneur par un ressort à lame. Le ressort à lame comprend alors une première extrémité fixée rigidement à un élément du balai et une deuxième extrémité longitudinale fixée rigidement à un entraîneur.

L'invention apporte un perfectionnement à cette technologie qui permet notamment de simplifier la fabrication et le montage du ressort à lame et du balai, et qui permet d'une part, de mettre en oeuvre la fonction de liaison mécanique entre l'entraineur et le balai, et d'autre part d'autoriser le pivotement du ressort à lame vis-à-vis de l'entraîneur, ce qui facilite notamment le remplacement du balai ou de sa lame d'essuyage.

L'invention propose à cet effet un ressort à lame pour un balai d'essuie-glace d'une vitre de véhicule, en particulier automobile, comportant au moins une lame flexible, le ressort à lame ayant une forme allongée et comprenant à une première extrémité longitudinale au moins une vertèbre de rigidification dudit balai, caractérisé en ce que le ressort à lame comprend à une deuxième extrémité longitudinale un organe tubulaire configuré pour recevoir un axe d'un entraîneur dudit balai.

Le caractère flexible de la lame réside dans le fait qu'elle est fabriquée d'un matériau pouvant être aisément courbé ou plié sans se rompre, tout en reprenant sa position initiale lorsque l'effort visant à le courber est interrompu.

Cet organe tubulaire permet de simplifier le montage du ressort à lame ainsi que du balai sur l'entraîneur. Un simple déplacement en translation de cet organe tubulaire sur l'axe de l'entraîneur peut suffire à assurer ce montage. De plus, l'organe tubulaire peut être configuré pour pouvoir se déplacer en rotation autour dudit axe, au moins sur un débattement angulaire donné. Le balai est alors monté pivotant vis-à-vis de l'entraîneur au moyen du ressort à lame selon l'invention.

Le ressort à lame selon l'invention peut comprendre une ou plusieurs des caractéristiques ci-dessous, prises isolément les unes des autres ou en combinaison les unes avec les autres :
- ladite au moins une lame comporte à une première extrémité longitudinale des moyens de fixation à ladite au moins une vertèbre de rigidification (par exemple des moyens de fixation par sertissage) ;
- ladite au moins une lame est formée d'une seule pièce avec ladite au moins une vertèbre de rigidification ;
- ladite au moins une lame est formée d'une seule pièce avec ledit organe tubulaire ;
- ladite au moins une lame comporte une partie d'extrémité longitudinale enroulée et définissant ledit organe tubulaire ;
- ladite au moins une lame comprend une partie médiane de forme non plane à l'état sans contrainte ;
- ladite au moins une lame comporte au moins un orifice configuré pour recevoir un doigt de retenue porté par ledit entraîneur ; et
- ledit organe tubulaire présente un axe d'allongement sensiblement parallèle à ladite au moins une lame.

On entend par ressort à lame, une lame de faible épaisseur ayant la propriété de se plier ou de se courber sans se rompre et pouvant ainsi aisément revenir dans sa position initiale. Le ressort à lame comporte un organe tubulaire permettant la liaison mécanique entre l'entraineur et une portion du balai maintenue plaquée contre la zone d'essuyage.

La présente invention concerne également un entraîneur pour un balai d'essuie-glace d'une vitre de véhicule, en particulier automobile, comportant des premiers moyens de fixation à un arbre d'un moteur et des seconds moyens de fixation à un ressort à lame dudit balai, caractérisé en ce que lesdits seconds moyens de fixation comprennent un axe configuré pour être reçu dans un organe tubulaire dudit ressort à lame, et des moyens d'appui et/ou de butée configurés pour coopérer avec ledit ressort à lame afin de limiter la rotation dudit organe tubulaire autour dudit axe.

L'entraîneur selon l'invention peut comprendre une ou plusieurs des caractéristiques ci-dessous, prises isolément les unes des autres ou en combinaison les unes avec les autres :
- ledit axe est configuré pour s'étendre sensiblement perpendiculairement audit arbre du moteur ;
- l'entraîneur comprend au moins une butée configurée pour coopérer avec ledit ressort à lame afin de limiter ses déplacements en translation le long dudit axe ;
- lesdits moyens d'appui et/ou de butée comprennent au moins une patte de forme allongée qui s'étend sensiblement parallèlement ou perpendiculairement audit axe ;
- ladite au moins une patte comprend une première extrémité longitudinale reliée à un corps de l'entraîneur et une deuxième extrémité longitudinale reliée à un doigt de retenue dudit ressort à lame dans au moins une direction le long dudit axe ; et
- ledit doigt est configuré pour être engagé dans un orifice dudit ressort à lame.

La flexibilité du ressort à lame permet le pivotement du balai d'essuie-glace, en vue par exemple, du remplacement de la lame du balai d'essuie-glace. La coopération des moyens d'appui et/ou de butée de l'entraineur avec une partie intermédiaire du ressort à lame permet de limiter le débattement angulaire du balai autour de l'axe formé sur l'entraîneur. Les moyens d'appui et/ou de butée et l'axe de l'entraîneur sont séparés d'une distance non-nulle.

La présente invention concerne encore un ensemble comportant un ressort à lame et un entraîneur tels que décrits ci-dessus.

La présente invention concerne enfin un balai d'essuie-glace d'une vitre de véhicule, en particulier automobile, comprenant un ressort à lame, un entraîneur, ou un ensemble tel que décrit ci-dessus.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un balai d'essuie-glace selon l'invention,
- la figure 2 est une vue schématique en perspective du balai de la figure 1,
- la figure 3 est une vue schématique en perspective éclatée du balai de la figure 1,
- la figure 4 est une vue schématique partielle en perspective et à plus grande échelle d'une extrémité du balai de la figure 1,
- les figures 5a à 5c sont des vues correspondant à celle de la figure 4 et représentant des étapes de montage du balai,
- la figure 6 est une vue schématique en perspective d'une variante de réalisation du balai d'essuie-glace selon l'invention,
- la figure 7 est une vue schématique en perspective éclatée du balai de la figure 6,
- la figure 8 est une vue schématique partielle en perspective et à plus grande échelle d'une extrémité du balai de la figure 6, et
- les figures 9a à 9c sont des vues correspondant à celle de la figure 8 et représentant des étapes de montage du balai.

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport à l'axe de rotation du balai, la dénomination intérieure correspondant à la partie du balai située du côté de cet axe de rotation. Enfin, les directions référencées comme supérieures ou inférieures correspondent à des orientations perpendiculaires au plan de rotation du balai, la dénomination inférieure contenant le plan de la vitre à essuyer.

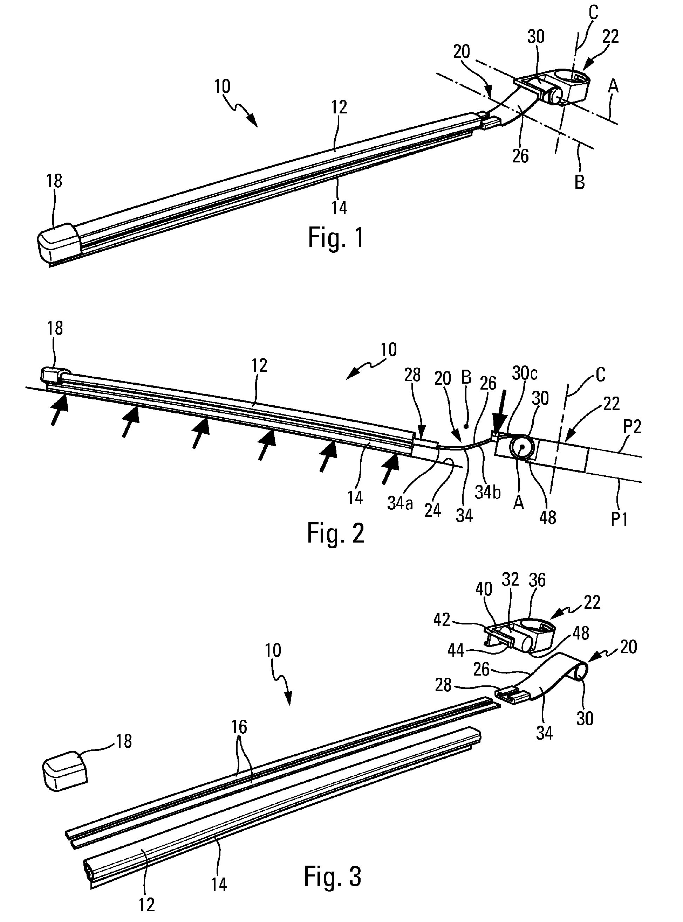

On se réfère d'abord aux figures 1 à 5c qui illustrent un premier mode de réalisation de l'invention. Les figures 1 à 3 représentent un balai d'essuie-glace 10 dans son ensemble qui est particulièrement adapté mais non exclusivement pour l'essuyage d'une vitre arrière de véhicule automobile.

Le balai d'essuie-glace 10 comprend pour l'essentiel cinq éléments qui sont mieux visibles en figure 3 : un corps longitudinal 12 portant une lame d'essuyage 14, au moins une et ici deux vertèbres de rigidification 16, un embout d'extrémité 18, un ressort à lame 20 et un entraîneur 22.

La lame d'essuyage 14 est réalisée en caoutchouc et est destinée à frotter contre la vitre 24 (figure 2) du véhicule pour évacuer de l'eau en l'amenant en dehors du champ de vision du conducteur. Le corps 12 comporte des rainures longitudinales latérales (non visibles) dans lesquelles sont logées respectivement les deux vertèbres 16. Ces vertèbres 16 sont parallèles et coplanaires et rigidifient la lame d'essuyage 14, de manière à favoriser son application sur la vitre 24. Le corps 12 et la lame 14 peuvent être réalisés d'une seule pièce.

L'embout d'extrémité 18 est emboîté sur les extrémités extérieures du corps 12 et des vertèbres 16 et est destiné à maintenir ces dernières dans les rainures du corps 12.

Le ressort à lame 20 est ici formé d'une seule pièce et comprend une seule lame 26 de forme allongée dont une extrémité comprend des moyens 28 de fixation par sertissage sur les extrémités intérieures des vertèbres 16. Ces moyens de fixation 28 sont par exemple formés par deux pattes latérales 28a, 28b qui sont pliées et rabattues sur la face supérieure de la lame 26. Les pattes 28a, 28b s'étendent ainsi au-dessus d'une partie de la lame 26 et définissent avec cette partie un espace de réception et de sertissage des vertèbres 16, chaque vertèbre étant serrée et retenue par une des pattes 28a, 28b.

La lame 26 a son extrémité intérieure qui est au moins en partie enroulée sur elle-même autour d'un axe A sensiblement parallèle à la lame (ou à tout plan tangent à la lame). L'enroulement est réalisé depuis le côté supérieur vers le côté inférieur de la lame 26. L'extrémité intérieure libre de la lame 26 affleure ici la face inférieure de la lame. Cet enroulement forme un organe tubulaire 30 qui est ici formé d'une seule pièce avec la lame 26 mais qui, en variante, pourrait être rapporté et fixé sur celle-ci. Cet organe 30 définit intérieurement un logement de réception d'un axe 32 de l'entraîneur 22, qui sera décrit plus en détail dans ce qui suit.

La figure 3 représente la lame 26 à l'état sans contrainte. La partie médiane 34 de la lame 26 s'étendant entre ses moyens de fixation 28 et l'organe 30, a une forme non plane et comprend une première partie extérieure 34a qui s'étend dans un plan P1 passant par les moyens de fixation 28 et parallèle aux vertèbres 16 et proche de celles-ci, une deuxième partie intermédiaire 34b de forme incurvée qui s'étend du bas vers le haut depuis l'extérieur vers l'intérieur, et une troisième partie intérieure 34c qui s'étend dans un plan P2 parallèle à P1 et qui s'étend au dessus et à distance des moyens de fixation 28.

La lame 26 est flexible par déformation élastique, en particulier de ses parties 34a, 34b, 34c, et plus particulièrement de sa partie 34b, la flexion étant réalisée autour d'au moins un axe sensiblement parallèle à la lame et représenté à titre d'exemple par la référence B dans les dessins. Cette déformation élastique de la lame 26 a en outre pour effet de générer un effort pour plaquer la lame d'essuyage contre la surface d'essuyage.

Typiquement, la lame 26 a une épaisseur de l'ordre de 2-3mm et est par exemple réalisée en métal.

L'entraîneur 22 comprend un corps 36 présentant un orifice 38 de montage d'un arbre d'un moteur (non représenté), en particulier électrique, du véhicule automobile. L'arbre du moteur a un axe désigné par la lettre C.

L'entraîneur 22 comprend en outre une paroi latérale 40 en saillie sur le corps 36 qui sert de support de l'axe 32 précité. La paroi 40 est sensiblement plane et s'étend dans un plan sensiblement parallèle à l'axe C. Elle est en saillie sur une face extérieure du corps 36 et s'étend depuis un côté latéral du corps en direction du reste du balai 10. L'axe 32 s'étend depuis une face latérale de cette paroi 40 et est situé du côté extérieur du corps. Cet axe 32 a une forme sensiblement cylindrique dont une extrémité est reliée à la paroi 40 et dont l'autre extrémité est libre pour autoriser l'engagement de l'axe 32 dans l'organe 30 du ressort 20. L'axe 32 a donc de préférence un diamètre au plus égal et de préférence légèrement inférieur au diamètre interne de l'organe 30.

L'entraîneur 22 comprend en outre une patte transversale 42 portée par la paroi 40. Cette patte 42 s'étend ici depuis la face latérale précitée de la paroi 40, au niveau de son coin extérieur et supérieur. Cette patte 42 a une forme allongée et s'étend sensiblement parallèlement à l'axe 32, elle est destinée à limiter la rotation du ressort à lame 26 autour de l'axe 32, tout en participant au maintien de l'organe 30 sur l'axe 32 par le biais d'un doigt ou crochet 44. Elle a une longueur sensiblement égale à celle de l'axe 32 qui est sensiblement égale à la largeur du corps 36.

Cette patte 42 comprend à son extrémité libre opposée à la paroi 40 un doigt 44 qui s'étend vers le bas et forme une butée de retenue du ressort à lame 26, dans une première direction parallèle à l'axe 32. Ce doigt 44 coopère avec un bord longitudinal 45 de la lame 26 afin de maintenir en position le ressort à lame 26. La paroi 40 forme une autre butée de retenue du ressort à lame dans une direction opposée. La paroi 40 coopère avec l'autre bord longitudinal 46 de la lame. Par ailleurs, la patte 42 forme un appui sur la lame 26 pour forcer sa déformation et maintenir la lame d'essuyage 14 plaquée contre la vitre, comme cela est représenté en figure 2. La patte 42 prend appui sur la face supérieure de la lame 26, ici au niveau de sa partie intermédiaire 34b qui a de préférence une largeur légèrement inférieure à la dimension transversale entre la paroi 40 et le doigt 44.

L'entraîneur 22 comprend en outre une lèvre inférieure 48 de guidage portée par le corps 36. Cette lèvre 48 est en saillie sur la face extérieure du corps 36 et s'étend depuis le côté inférieur du corps en direction du reste du balai 10. Elle s'étend dans un plan sensiblement parallèle à l'axe 32, sur sensiblement toute la dimension transversale du corps. Son bord libre supérieur 50, opposé au corps, est chanfreiné et facilite le guidage de l'organe 30 lors de son montage sur l'axe 32 et sa rotation autour de celui-ci.

L'entraîneur 22 peut être formé d'une seule pièce, par exemple en matériau plastique ou composite. Il peut être obtenu par moulage.

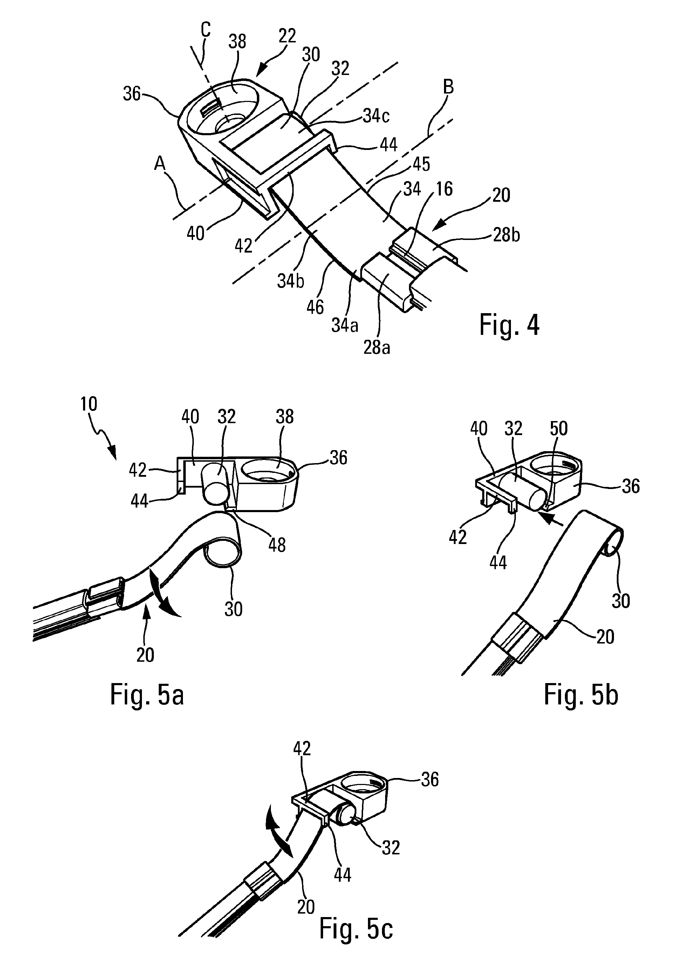

Le montage du balai 10 va maintenant être décrit en référence aux figures 5a à 5c. Le ressort à lame 20 est serti sur les vertèbres 16 après leur montage dans les rainures du corps du balai. L'embout d'extrémité est monté. L'organe tubulaire 30 du ressort est aligné avec l'axe 32 de l'entraîneur 22 avant ou après son montage sur l'arbre du moteur (figure 5a) et le ressort est déplacé de sorte que l'axe 32 s'engage dans l'organe 30 (figures 5b et 5c). Pour cela, il faut que la patte 42 et le doigt 44 ne gênent pas le déplacement en translation du ressort parallèlement à l'axe A.

Dans le cas où l'entraîneur n'est pas encore monté sur l'arbre du moteur, il suffit alors d'incliner le ressort vis-à-vis de l'entraîneur, par pivotement autour de l'axe A ou 32, jusqu'à ce que l'insertion précitée soit rendue possible (les plans tangents aux parties 34b et 34c de la lame 26 ne passant plus par la patte 42 et le doigt 44. L'étape suivante consiste alors à faire pivoter le ressort à lame 20 autour de l'axe 32 jusqu'à ce que celui-ci vienne en appui sur la patte 42. L'entraîneur peut alors être fixé à l'arbre du moteur, cette fixation entraînant une force d'appui de la patte 42 sur le ressort et une déformation élastique de celui-ci se traduisant par une sollicitation de la lame d'essuyage 14 contre la vitre 24.

Dans le cas où l'entraîneur 22 est déjà monté sur l'arbre du moteur, il est nécessaire de déformer élastiquement le ressort 20 pour que les plans tangents aux parties 34b et 34c de la lame 26 ne passent plus par la patte 42 et le doigt 44, et autoriser l'insertion précitée. Cette étape peut être réalisée au moyen d'un outil approprié. L'étape suivante consiste alors à faire relâcher la contrainte appliquée au ressort jusqu'à ce que lame d'essuyage 14 prenne appui sur la vitre 24.

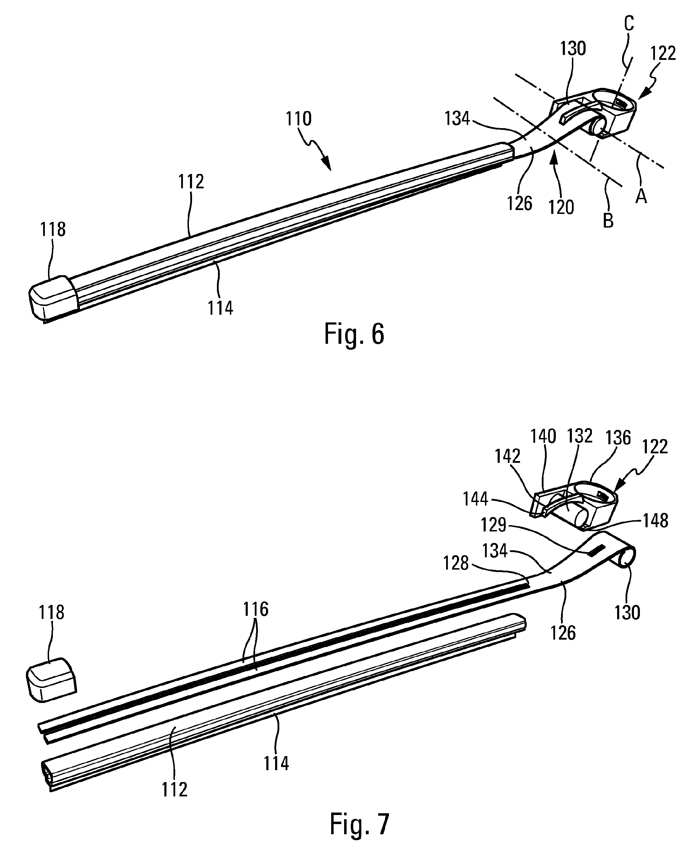

On se réfère désormais aux figures 6 à 9c qui illustrent une variante de réalisation de l'invention. Les figures 6 et 7 représentent un balai d'essuie-glace 110 dans son ensemble qui est particulièrement adapté mais non exclusivement pour l'essuyage d'une vitre arrière de véhicule automobile.

Le balai d'essuie-glace 110 est similaire à celui décrit dans ce qui précède et comprend pour l'essentiel cinq éléments qui sont mieux visibles en figure 7 : un corps longitudinal 112 portant une lame d'essuyage 114, au moins une et ici deux vertèbres de rigidification 116, un embout d'extrémité 118, un ressort à lame 120 et un entraîneur 122.

La lame d'essuyage 114 est réalisée en caoutchouc et est destinée à frotter contre la vitre du véhicule pour évacuer de l'eau en l'amenant en dehors du champ de vision du conducteur. Le corps 112 comporte des rainures longitudinales latérales (non visibles) dans lesquelles sont logées respectivement les deux vertèbres 116. Ces vertèbres 116 sont parallèles et coplanaires et rigidifient la lame d'essuyage 114, de manière à favoriser son application sur la vitre. Le corps 112 et la lame 114 peuvent être réalisés d'une seule pièce.

L'embout d'extrémité 118 est emboîté sur les extrémités extérieures du corps 112 et des vertèbres 116 et est destiné à maintenir ces dernières dans les rainures du corps 112.

Le ressort à lame 120 comprend une seule lame 126 de forme allongée qui est ici formée d'une seule pièce avec les vertèbres 116. La lame du ressort à lame comprend à son extrémité extérieure des moyens 128 de liaison aux vertèbres 116, intrinsèque à la seule pièce. On comprend de cela que la lame 126 du ressort à lame 120 et les vertèbres 116 sont unitaires et monobloc, les moyens de liaison 128 étant formés par la portion de jonction entre ces vertèbres et cette lame.

La lame 126 a son extrémité intérieure qui est au moins en partie enroulée sur elle-même autour d'un axe A sensiblement parallèle à la lame. L'enroulement est réalisé depuis le côté supérieur vers le côté inférieur de la lame 126. L'extrémité intérieure libre de la lame 126 affleure ici la face inférieure de la lame. Cet enroulement forme un organe tubulaire 130 qui est ici formé d'une seule pièce avec la lame 126 mais qui, en variante, pourrait être rapporté et fixé sur celle-ci. Cet organe 130 définit intérieurement un logement de réception d'un axe 132 de l'entraîneur 122, qui sera décrit plus en détail dans ce qui suit.

La figure 7 représente la lame 126 à l'état sans contrainte. La partie médiane 134 de la lame 126 s'étendant entre ses moyens de liaison 128 et l'organe 130, a une forme non plane et comprend une première partie extérieure 134a qui s'étend dans un plan passant par les moyens de liaison 128 et parallèle aux vertèbres 116 et proche de celles-ci, une deuxième partie intermédiaire 134b de forme incurvée qui s'étend du bas vers le haut depuis l'extérieur vers l'intérieur, et une troisième partie intérieure 134c qui s'étend dans un plan parallèle au plan précité et qui s'étend au dessus et à distance des moyens de liaison 128.

La lame 126 comprend dans sa partie intermédiaire 134b un orifice 129 qui est configuré pour recevoir un doigt 144 de l'entraîneur 122 comme cela sera décrit plus en détail dans ce qui suit.

La lame 126 est flexible par déformation élastique, en particulier de ses parties 134a, 134b, 134c, et plus particulièrement de sa partie 134b, la flexion étant réalisée autour d'au moins un axe sensiblement parallèle à la lame et représenté à titre d'exemple par la référence B dans les dessins.

Typiquement, la lame 126 a une épaisseur de l'ordre de 2-3mm et est par exemple réalisée en métal.

L'entraîneur 122 comprend un corps 136 présentant un orifice 138 de montage d'un arbre d'un moteur (non représenté), en particulier électrique, du véhicule automobile. L'arbre du moteur a un axe désigné par la lettre C.

L'entraîneur 122 comprend en outre une paroi latérale 140 en saillie sur le corps qui sert de support de l'axe 132 précité. La paroi 140 est sensiblement plane et s'étend dans un plan sensiblement parallèle à l'axe C. Elle est en saillie sur une face extérieure du corps 136 et s'étend depuis un côté latéral du corps 136 en direction du reste du balai 110. L'axe 132 s'étend depuis une face latérale de cette paroi 140 et est situé du côté extérieur du corps. Cet axe 132 a une forme sensiblement cylindrique dont une extrémité est reliée à la paroi 140 et dont l'autre extrémité est libre pour autoriser l'engagement de l'axe 132 dans l'organe 130 du ressort 120. L'axe 132 a donc de préférence un diamètre au plus égal et de préférence légèrement inférieur au diamètre interne de l'organe 130.

L'entraîneur 122 comprend en outre une patte longitudinale 142 portée par le corps 136. Cette patte 142 s'étend ici depuis la face extérieure précitée du corps, au niveau de son bord supérieur. Cette patte 142 a une forme allongée et s'étend sensiblement perpendiculairement aux axes A et C. Elle a ici une longueur qui est légèrement supérieure à celle de la paroi 40.

Cette patte 142 comprend à son extrémité libre opposée au corps 136 un doigt 144 qui s'étend vers le bas et forme des butées de retenue du ressort à lame 126, dans les deux directions parallèles à l'axe 132. Le doigt 144 est engagé dans l'orifice 129 de la lame 126 et coopère avec les bords longitudinaux de cet orifice 129. Par ailleurs, la patte 142 forme un appui sur la lame 126 pour forcer sa déformation et maintenir la lame d'essuyage 114 plaquée contre la vitre, comme cela est représenté en figure 12. La patte 142 prend appui sur la face supérieure de la lame 126, ici au niveau de sa partie intermédiaire 134b qui a de préférence une largeur légèrement inférieure à la dimension transversale entre la paroi 140 et le doigt 144.

L'entraîneur 122 comprend en outre une lèvre inférieure 148 de guidage portée par le corps 136, cette lèvre 148 est en saillie sur la face extérieure du corps 136 et s'étend depuis le côté inférieur du corps en direction du reste du balai 110. Elle s'étend dans un plan sensiblement parallèle à l'axe 132, sur sensiblement toute la dimension transversale du corps. Son bord libre supérieur 50, opposé au corps, est chanfreiné et facilite le guidage de l'organe 130 lors de son montage sur l'axe 132 et sa rotation autour de celui-ci.

L'entraîneur 122 peut être formé d'une seule pièce, par exemple en matériau plastique ou composite. Il peut être obtenu par moulage.

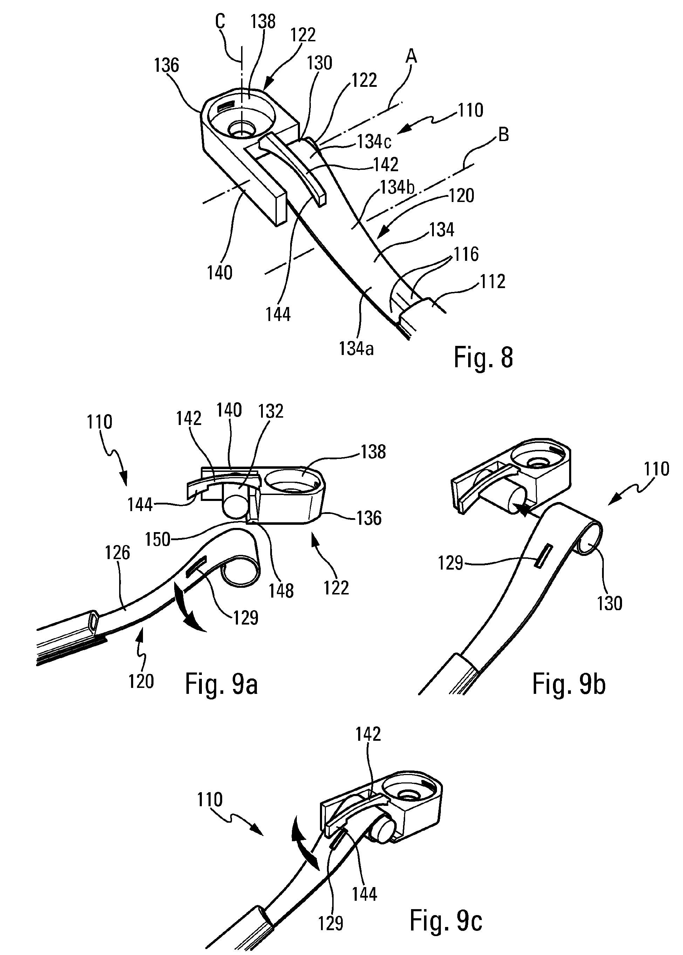

Le montage du balai 110 peut être réalisé de la même manière que le balai 10, les figures 9a à 9c représentant des étapes de ce montage.

## Revendications

1. Ressort à lame (20, 120) pour un balai d'essuie-glace (10, 110) d'une vitre (24) de véhicule, en particulier automobile, comportant au moins une lame (26, 126) flexible, le ressort à lame (20, 120) ayant une forme allongée et comprenant à une première extrémité longitudinale au moins une vertèbre (16, 116) de rigidification dudit balai, **caractérisé en ce que** le ressort à lame (20, 120) comprend à une deuxième extrémité longitudinale un organe tubulaire (30, 130) configuré pour recevoir un axe (32, 132) d'un entraîneur (22, 122) dudit balai.

2. Ressort à lame (20) selon la revendication 1, **caractérisé en ce que** ladite au moins une lame (26) comporte à une première extrémité longitudinale des moyens (28) de fixation à ladite au moins une vertèbre de rigidification (16).

3. Ressort à lame (120) selon la revendication 1 ou 2, **caractérisé en ce que** ladite au moins une lame (126) est formée d'une seule pièce avec ladite au moins une vertèbre de rigidification (116).

4. Ressort à lame (20, 120) selon l'une des revendications précédentes, **caractérisé en ce que** ladite au moins une lame (26, 126) est formée d'une seule pièce avec ledit organe tubulaire (30, 130).

5. Ressort à lame (20, 120) selon l'une des revendications précédentes, **caractérisé en ce que** ladite au moins une lame (26, 126) comporte une partie d'extrémité longitudinale enroulée et définissant ledit organe tubulaire (30, 130).

6. Ressort à lame (20, 120) selon l'une des revendications précédentes, **caractérisé en ce que** ladite au moins une lame (26, 126) comprend une partie médiane (34, 134) de forme non plane à l'état sans contrainte.

7. Ressort à lame (120) selon l'une des revendications précédentes, **caractérisé en ce que** ladite au moins une lame (126) comporte au moins un orifice (129) configuré pour recevoir un doigt (144) de retenue porté par ledit entraîneur (122).

8. Ressort à lame (20, 120) selon l'une des revendications précédentes, **caractérisé en ce que** ledit organe tubulaire (30, 130) présente un axe d'allongement (A) sensiblement parallèle à ladite au moins une lame (26, 126).

9. Entraîneur (22, 122) pour un balai d'essuie-glace (10, 110) d'une vitre (24) de véhicule, en particulier automobile, comportant des premiers moyens (38, 138) de fixation à un arbre d'un moteur et des seconds moyens (32, 42, 132, 142) de fixation à un ressort à lame (20, 120) dudit balai, **caractérisé en ce que** lesdits seconds moyens de fixation comprennent un axe (32, 132) configuré pour être reçu dans un organe tubulaire (30, 130) dudit ressort à lame, et des moyens (42, 142) d'appui et/ou de butée configurés pour coopérer avec ledit ressort à lame afin de limiter la rotation dudit organe tubulaire autour dudit axe.

10. Entraineur (22,122) selon la revendication 9, **caractérisé en ce qu'**il comprend en outre une paroi latérale (40, 140) en saillie sur un corps (36, 136) qui sert de support de l'axe (32, 132).

11. Entraîneur (22, 122) selon la revendication 9 ou 10, **caractérisé en ce que** ledit axe (32, 132) est configuré pour s'étendre sensiblement perpendiculairement audit arbre du moteur.

12. Entraîneur (22, 122) selon l'une des revendications 9 à 11, **caractérisé en ce qu'**il comprend au moins une butée (44) configurée pour coopérer avec ledit ressort à lame (20, 120) afin de limiter ses déplacements en translation le long dudit axe (32, 132).

13. Entraîneur (22, 122) selon l'une des revendications 9 à 12, **caractérisé en ce que** lesdits moyens d'appui et/ou de butée comprennent au moins une patte (42, 142) de forme allongée qui s'étend sensiblement parallèlement ou perpendiculairement audit axe (32, 132).

14. Entraîneur (22, 122) selon la revendication 13, **caractérisé en ce que** ladite au moins une patte (42, 142) comprend une première extrémité longitudinale reliée à un corps (36, 136) de l'entraîneur (22, 122) et une deuxième extrémité longitudinale reliée à un doigt de retenue (44, 144) dudit ressort à lame (20, 120) dans au moins une direction le long dudit axe (32, 132).

15. Entraîneur (122) selon la revendication 14, **caractérisé en ce que** ledit doigt (144) est configuré pour être engagé dans un orifice (129) dudit ressort à lame (120).

16. Balai d'essuie-glace d'une vitre (24) de véhicule, en particulier automobile, comprenant un ressort à lame (20, 120) selon l'une des revendications 1 à 8, un entraîneur (22, 122) selon l'une des revendications 9 à 14, ou un ensemble comportant un ressort à lame (20, 120) selon l'une des revendications 1 à 8 et un entraîneur (22, 122) selon l'une des revendications 9 à 15.
